# FASCICULE DE BREVET EUROPEEN

(11) **EP 1 372 808 B1**
(45) Date de publication et mention de la délivrance du brevet: **25.01.2012**
(21) Numéro de dépôt: 02759803.6
(22) Date de dépôt: 27.03.2002
(51) Int. Cl.: B01D 53/02, B01D 15/00, B01J 20/08, B01J 20/04, B01D 53/04

(54) **PROCEDE D'ELIMINATION DES MOLECULES OXYGENEES ORGANIQUES PRESENTES DANS UN EFFLUENT ORGANIQUE, UTILISANT DES AGGLOMERES D'ALUMINE**
VERFAHREN ZUR BESEITIGUNG VON IN ORGANISCHEN ABWÄSSERN ODER ABGASEN ENTHALTENEN SAUERSTOFFHALTIGEN ORGANISCHEN MOLEKÜLEN UNTER VERWENDUNG VON ALUMINIUMOXIDAGGLOMERATEN
METHOD FOR ELIMINATING OXYGENATED ORGANIC MOLECULES PRESENT IN AN ORGANIC EFFLUENT USING ALUMINA AGGLOMERATES

(30) Priorité: 04.04.2001 FR 0104588
(43) Date de publication de la demande: 02.01.2004
(73) Titulaire: AXENS, 92500 Rueil Malmaison (FR)
(72) Inventeur: NEDEZ, Christophe, F-30340 Salindres (FR)
(74) Mandataire: Schmitt, Nicolas A.J.
(86) Numéro de dépôt international: PCT/FR2002/001069
(87) Numéro de publication internationale: WO 2002/081047

(56) Documents cités:
- WO-A-86/02285
- DE-A- 19 843 241
- FR-A- 2 224 196
- FR-A- 2 774 606
- US-A- 2 943 105
- US-A- 5 427 689
- US-A- 6 159 898
- DATABASE WPI Section Ch, Week 198843 Derwent Publications Ltd., London, GB; Class A41, AN 1988-305350 XP002188494 ANONYMOUS: "Highly active, regeneratable alumina prodn. - for removing contaminants from feed stream, involves heating in nitrogen stream to remove surface water" & RESEARCH DISCLOSURE, vol. 293, no. 003, 10 septembre 1988 (1988-09-10), Emsworth, GB

## Description

L'invention concerne le domaine de l'élimination des impuretés contenues dans des effluents industriels organiques à l'état liquide ou gazeux. Plus précisément, elle concerne l'élimination d'impuretés oxygénées par adsorption sur des agglomérés d'alumine.

De nombreux effluents industriels gazeux ou liquides contiennent des impuretés dont l'élimination est désirable. En effet, dans le cas contraire, ces impuretés peuvent poser des problèmes environnementaux, par exemple. Plus largement, le maintien des impuretés au sein de l'effluent peut poser des problèmes de qualité (coloration de l'effluent, par exemple) ou influer négativement sur une transformation en aval (destruction d'un catalyseur nécessaire à une réaction chimique, ou réactions parasites conduisant à une baisse de sélectivité). Parmi les impuretés rencontrées industriellement qu'il peut être désirable d'éliminer figurent les alcools et les acides organiques et, de manière générale, des molécules oxygénées organiques.

Eliminer des impuretés d'un effluent industriel liquide peut êtres effectué par distillation. Les coûts d'une telle opération sont souvent élevés, et de plus cette méthode ne permet pas de résoudre tous les problèmes techniques posés, une dégradation des composants essentiels de l'effluent pouvant, par exemple, être induite par une élévation de la température. Par ailleurs, les impuretés sont souvent présentes sous la forme de faibles traces (moins de 1 %), rendant par là disproportionné l'usage d'une distillation. Enfin, les températures de distinction des différents constituants de l'effluent d'une part et des impuretés d'autre part, ne sont pas toujours suffisamment différentes les unes des autres pour permettre l'utilisation de cette méthode.

Dans certains cas spécifiques, des impuretés peuvent être éliminées via un lavage avec un solvant adapté. Cette solution n'est cependant pas toujours applicable, et se pose ensuite, de plus en plus, la question du retraitement des solvants usés.

L'utilisation d'un adsorbant solide peut, dès lors, souvent constituer une solution pertinente au problème posé. Cette solution technique peut être utilisée avec un effluent à épurer se trouvant sous une forme liquide ou gazeuse.

A cet effet, il est connu d'employer comme adsorbant solide des agglomérés d'alumine, notamment pour éliminer des impuretés constituées par des composés organiques oxygénés, tels que des alcools et des acides organiques présents dans un effluent organique.

Le but de l'invention est de proposer aux utilisateurs un procédé présentant des performances optimales pour l'élimination des impuretés organiques oxygénées renfermées dans un effluent organique.

A cet effet, l'invention a pour objet un procédé d'élimination des molécules oxygénées organiques, telles que les alcools et acides organiques, présentes dans un effluent organique ou gazeux, caractérisé en ce qu'on réalise cette élimination par adsorption desdites molécules oxygénées organiques sur des agglomérés d'alumine présentant les caractéristiques suivantes :
- leur surface spécifique est supérieure ou égale à 10 m²/g,
- ils renferment un ou des composés dopants sélectionnés parmi les composés de métaux alcalins, les composés de métaux alcalino-terreux et les composés de terres rares avec une teneur massique totale en ces éléments inférieure

à 5000 ppm, leur volume poreux total est supérieur ou égal à 45 ml/100g,

Lesdits composés dopants sont de préférence sélectionnés parmi les composés à base de sodium, de potassium, de calcium, de magnésium, de lanthane.

Lesdits agglomérés d'alumine peuvent comporter comme unique composé dopant un composé de sodium.

Lesdits agglomérés d'alumine peuvent se présenter sous forme de billes.

Lesdites billes peuvent avoir un diamètre compris entre 0,5 et 10 mm, préférentiellement entre 0,7 et 8 mm, très préférentiellement entre 0,8 et 5 mm.

Les agglomérés d'alumine peuvent aussi se présenter sous la forme de matériaux extrudés.

Ils peuvent alors avoir une taille comprise entre 0,5 et 5mm, préférentiellement entre 0,7 et 3mm.

Ledit effluent organique peut être un hydrocarbure ou un mélange d'hydrocarbures.

Ladite élimination peut être réalisée à température ambiante.

On procède de préférence périodiquement à une régénération des agglomérés d'alumine par traitement sous un courant de gaz chaud.

Ledit gaz chaud peut être un gaz inerte, dont la température peut être d'au moins 130°C, préférentiellement d'au moins 200°C, très préférentiellement d'au moins 230°C.

Ledit gaz chaud peut être un gaz ou un mélange gazeux oxydant, dont la température est d'au moins 150°C, préférentiellement d'au moins 200°C.

Ledit gaz ou mélange gazeux oxydant est de préférence sélectionné parmi l'air, un autre mélange oxygène/azote et un mélange contenant de la vapeur d'eau.

On peut utiliser pour la régénération des agglomérés d'alumine plusieurs gaz chauds en succession, lesdits gaz chauds étant chacun d'un des types précédents.

Comme on l'aura compris, l'invention consiste à conférer aux agglomérés d'alumine utilisés lors d'une opération d'adsorption de composés organiques oxygénés d'un effluent organique, une morphologie particulière en termes combinés de surface spécifique, de volume poreux total et de volume représenté par les pores de diamètre supérieur ou égal à 70Å. Les inventeurs ont constaté que de tels agglomérés se prêtaient de manière remarquable à l'adsorption des composés organiques oxygénés.

L'efficacité des alumines pour l'application envisagée peut encore être renforcée si on leur ajoute des produits « dopants » constitués par des composés à base de métaux alcalins ou alcalino-terreux ou de terres rares. Grâce à ces dopants, il est possible d'obtenir les résultats souhaités avec des porosités moindres pour ces alumines.

Le volume poreux total (ou VPT) et le volume représenté par les pores de diamètre supérieur ou égal à 70Å (ou V_{70Å}) peuvent être mesurés sur un échantillon d'alumine par la méthode classique de porosimétrie au mercure.

A cet effet, l'échantillon d'alumine est placé dans une colonne, dans laquelle on introduit du mercure sous une pression P. Le mercure ne mouillant pas l'alumine, sa pénétration ou sa non-pénétration dans les pores de l'échantillon ayant un diamètre donné est fonction de la valeur de P. Les pores les plus fins nécessitent, pour être remplis, l'établissement d'une pression P plus élevée que pour le remplissage des pores plus grossiers. La mesure de la quantité de mercure pénétrant dans l'échantillon pour différentes valeurs de P permet de connaître le volume occupé par les pores de diamètre supérieur à des valeurs données de ce diamètre. L'application d'une pression P aussi élevée que possible donne accès au VPT.

L'alumine pourra se présenter sous toutes les formes habituelles connues : poudre, billes, matériaux extrudés, concassés, monolithiques. Les billes et les extrudés seront préférés. La taille des billes sera alors utilement comprise entre 0,5 et 10 mm, de préférence incluse entre 0,7 et 8 mm, encore préférentiellement incluse entre 0,8 et 5 mm. Les extrudés pourront être de forme cylindrique ou polylobée, pleins ou creux ; leur taille sera utilement comprise entre 0,5 et 5 mm, préférablement entre 0,7 et 3 mm.

Pour l'utilisation envisagée, on peut employer des agglomérés d'alumine de composition standard, préparés et mis en forme par toutes les méthodes connues permettant d'obtenir les caractéristiques de porosité recherchées. A titre d'exemple, les billes pourront être obtenues au moyen d'une technologie tournante, par agglomération d'une poudre d'alumine dans un drageoir ou un tambour. De manière connue, ce type de procédé permet d'obtenir des billes de diamètre et de répartitions de pores contrôlées, ces dimensions et ces répartitions étant, en général, créées pendant l'étape d'agglomération. La porosité peut être créée par différents moyens comme le choix de la granulométrie de la poudre d'alumine ou l'agglomération de plusieurs poudres d'alumine de différentes granulométries. Une autre méthode consiste à mélanger à la poudre d'alumine, avant ou pendant l'étape d'agglomération, un composé, appelé porogène, disparaissant par chauffage et créant ainsi une porosité dans les billes. Comme composés porogènes utilisés, on peut citer, à titre d'exemple, la farine de bois, le charbon de bois, le soufre, des goudrons, des matières plastiques ou émulsions de matières plastiques telles que le polychlorure de vinyle, des alcools polyvinyliques, la naphtaline ou analogues. La quantité de composés porogènes ajoutés est déterminée par le volume désiré. Un ou plusieurs traitements thermiques viennent alors achever la mise en forme des billes. Les extrudés pourront être obtenus par malaxage puis extrusion d'un gel d'alumine, ou d'une poudre d'alumine, ou d'un mélange de matières premières différentes.

La poudre d'alumine initiale peut être obtenue par déshydratation rapide d'un hydroxyde ou oxyhydroxyde d'aluminium (hydrargillite, par exemple).

Les caractéristiques de porosité exigées par l'invention lorsque les agglomérés d'alumine ont une composition standard sont :
- une surface spécifique supérieure ou égale à 10 m²/g,
- un VPT supérieur ou égal à 45 ml/100g,
- un V_{70Å} supérieur à 15 ml/100g.

Cependant, les meilleurs résultats sont obtenus lorsqu'on utilise, au lieu d'agglomérés d'alumine de composition standard, des agglomérés d'alumine auxquels on a incorporé un ou plusieurs composés « dopants », constitués par des composés de métaux alcalins, des composés de métaux alcalino-terreux ou des composés de terres rares. Préférentiellement, on choisit des composés à base de sodium, de potassium, de calcium, de magnésium ou de lanthane. Le sodium est un exemple privilégié, que l'on peut introduire sous forme d'un ou de plusieurs précurseurs de son oxyde Na₂O.

L'ajout du ou des composés dopants peut être effectué antérieurement ou postérieurement à l'opération de mise en forme, ou pendant celle-ci.

Les composés dopants sont présents dans l'aggloméré d'alumine à raison d'une teneur massique totale inférieure à 5000 ppm. Une teneur trop élevée en composés dopants diminue exagérément la teneur en alumine, donc la surface de l'adsorbant.

Ces composés dopants permettent d'accentuer les propriétés adsorbantes de la surface des agglomérés d'alumine vis à vis des molécules organiques oxygénées dont l'élimination est recherchée.

L'invention trouve une application privilégiée dans la purification d'un effluent organique gazeux ou liquide, constitué d'un hydrocarbure ou d'un mélange d'hydrocarbures, saturés ou non, aliphatiques et/ou aromatiques, et dont on désire réduire la teneur en composés oxygénés organiques, tels que les alcools et les acides organiques. L'opération est particulièrement efficace sur un effluent liquide.

Le ou les alcools à éliminer sont du type général de formule R-OH où R contient au moins un atome de carbone (l'eau est donc exclue de cette application). Il peut s'agir de composés comportant de multiples fonctions alcool (diols ou triols notamment) même si les monoalcools sont la cible privilégiée de l'élimination d'alcools. Les composés phénoliques sont également concernés par l'invention.

Le ou les acides organiques à éliminer répondent globalement à la formule R-COOH, R étant un atome d'hydrogène ou un radical comprenant au moins un atome de carbone. Ces composés peuvent comporter plus d'une fonction acide (diacides ou triacides par exemple).

L'opération d'adsorption pourra le plus souvent être effectuée à la température ambiante ou à une température proche de l'ambiante, par exemple entre 0 et 60°C, mais cette condition n'a rien d'obligatoire dans le cas général.

Il est conseillé de procéder périodiquement à une régénération de l'alumine utilisée, afin de prolonger sa durée d'utilisation.

Un tel traitement de régénération peut être effectué par passage d'un courant chaud de gaz inerte (azote ou argon, par exemple), à 130°C environ par exemple, sur l'aggloméré, si les impuretés éliminées sont essentiellement des alcools aliphatiques. Une température inférieure à 130°C est acceptable si on peut prolonger le traitement en conséquence.

Dans le cas où les impuretés sont essentiellement des alcools aromatiques et/ou des acides organiques, il sera préférable de porter le courant gazeux à 200°C ou davantage, voire à au moins 230°C.

On peut également utiliser un gaz ou un mélange gazeux oxydant (tel que de l'air, un autre mélange azote/oxygène, ou un mélange contenant de la vapeur d'eau) porté à au moins 150°C, voire à au moins 200°C.

Ces divers traitements peuvent être utilisés en combinaison.

On va à présent donner des exemples d'agglomérés d'alumine selon l'invention et des exemples comparatifs, ainsi que des résultats d'expériences montrant les capacités adsorbantes de ces divers agglomérés d'alumine vis à vis d'alcools et d'acides organiques mélangés à un hydrocarbure.

Les compositions et morphologies des agglomérés utilisés sont reportées dans le tableau 1.

| | | | | | | | |
|---|---|---|---|---|---|---|---|
| Alumine | 1 | 2 | 3 | 4 | 5 | 6 | 7 |
| Forme | billes | billes | billes | billes | extrudés | billes | billes |
| Diamètre (mm) | 1 , 4-2, 8 | 2-4 | 1, 4-2, 8 | 2, 4-4 | 1,2 | 1,4-2,8 | 2,4-4 |
| Surface (m²/g) | 328 | 8 | 252 | 192 | 255 | 139 | 181 |
| VPT (ml/100g) | 43 | 52 | 40 | 71 | 56 | 114 | 65 |
| V_{70Å} (ml/100g) | 15 | 52 | 14 | 62 | 43 | 113 | 56 |
| Na₂O (ppm) | 3400 | 600 | 20000 | 600 | 600 | 500 | 10500 |

Tableau 1 : composition et morphologie des agglomérés d'alumine utilisés lors des expériences.

Les agglomérés 1, 2, 3 et 7 sont des exemples ne relevant pas de l'invention. L'aggloméré 1 possède une teneur en Na₂O inférieure à 5000 ppm qui a été obtenue naturellement au cours de sa préparation. Il présente une surface spécifique importante, mais un VPT légèrement inférieur à la limite basse exigée, et un V_{70Å} juste à la limite minimale exigée. L'aggloméré 2 présente une faible surface spécifique, inférieure au minimum exigé, mais un VPT et un V_{70Å} relativement élevés. Sa teneur en Na₂O a été abaissée lors des traitements qui ont eu lieu pendant sa fabrication.

Les agglomérés 4, 5 et 6 sont conformes à l'invention. Ils ont tous une surface spécifique élevée (quoique moindre que celle de l'aggloméré 1 de référence).

Les agglomérés 4 et 5 ont un VPT et un V_{70Å} élevés ; la teneur en Na₂O de l'aggloméré 4 a été abaissée de manière identique à ce qui a été fait pour l'aggloméré 2 de référence. La teneur en Na₂O de l'aggloméré 5 est due à celle de la matière première utilisée, qui correspond à un gel de boehmite.

On a étudié l'adsorption par ces agglomérés des composés suivants, mélangés à du cyclohexane :
- pour les alcools, l'alcool tertioamylique, le méthanol, le pentanol, le phénol, le 4-tertiobutylphénol, le 2-tertiobutylphénol, le carvacrol, le 1 ,2-propanediol ;
- pour les acides organiques, l'acide acétique, l'acide n-benzoïque, l'acide 2, 2-diméthylbutanoïque, l'acide benzoïque.

Les essais ont été conduits comme suit : dans un bécher est placé un mélange constitué de 250 ml de cyclohexane et de 1000 ppm d'un alcool ou 500 vpm d'un acide organique. Un échantillon de 0,5 g d'alumine (pour les alcools et l'acide benzoïque) ou 0,2 g d'alumine (pour les autres acides organiques) prétraitée sous azote durant 2 heures à 300°C est placé dans le bécher, dans une nacelle isolant les billes ou les extrudés du barreau d'agitation du mélange. Un bouchon en verre ferme le bécher, afin d'éviter une modification de l'humidité du système. L'avancée de l'adsorption est suivie par le biais d'injection d'échantillons du mélange dans un appareil de chromatographie en phase gazeuse.

Les résultats d'adsorption sont résumés dans les tableaux 2 à 6 suivants ; ils sont exprimés en reprise de masse de l'alumine, considérée après prétraitement, due à l'adsorption d'un alcool ou d'un acide organique.

| Alcool | Alumine | Reprise de masse (g/100g) |
|---|---|---|
| 1000 ppm d'alcool tertioamylique | 1 | 5,5 |
| | 2 | 0,6 |
| | 3 | 12,6 |
| | 5 | 10,7 |
| | 6 | 14,1 |
| 1000 ppm de 1-pentanol | 1 | 1,8 |
| | 5 | 3,1 |

Tableau 2 : adsorption d'alcool relevée après 2 heures de réaction

| Alcool | Alumine | Reprise de masse (g/100g) |
|---|---|---|
| 1000 ppm de phénol | 1 | 9,6 |
| | 2 | 0,8 |
| | 5 | 12,3 |
| 1000 ppm de 4-tBu-phénol | 1 | 6,2 |
| | 2 | 6,9 |
| | 4 | 8,1 |
| | 5 | 11,0 |
| | 6 | 10,5 |
| | 7 | 8,7 |
| 1000 ppm de 2-tBu-phénol | 1 | 5,9 |
| | 5 | 7,0 |
| 1000 ppm de carvacrol | 1 | 4,2 |
| | 5 | 10,3 |
| 1000 ppm de 1,2-propanediol | 2 | 0,5 |
| | 4 | 8,6 |

Tableau 3 : adsorption d'alcool relevée après 18 heures de réaction

| Alcool | Alumine | Reprise de masse (g/100g) |
|---|---|---|
| 1000 ppm d'alcool tertioamylique | 1 | 23,9 |
| | 2 | 1,6 |
| | 4 | 29,8 |
| | 5 | 33,5 |

Tableau 4 : adsorption d'alcool relevée après 320 heures de réaction

| Acide organique | Alumine | Reprise de masse (g/100g) |
|---|---|---|
| 500 vpm d'acide acétique | 1 | 7,9 |
| | 2 | 0,3 |
| | 3 | 9,5 |
| | 5 | 12,5 |
| 500 vpm d'acide n-hexanoïque | 1 | 1,9 |
| | 2 | 0,2 |
| | 3 | 2,5 |
| | 4 | 3,2 |
| | 5 | 5,3 |
| 500 vpm d'acide 2,2- | 1 | 2,7 |
| diméthylbutanoïque | 2 | 0,3 |
| | 3 | 3,6 |
| | 4 | 7,3 |
| | 5 | 10,5 |
| | 6 | 10,1 |
| | 7 | 7,9 |
| 500 vpm d'acide benzoïque | 1 | 2,2 |
| | 2 | 0,2 |
| | 3 | 3,5 |
| | 4 | 10,3 |
| | 5 | 14,9 |
| | 6 | 13,8 |
| | 7 | 11,5 |

Tableau 5 : adsorption d'acide organique relevée après 20 heures de réaction

| Acide organique | Alumine | Reprise de masse (g/100g) |
|---|---|---|
| 500 vpm d'acide 2,2- | 1 | 3,3 |
| diméthylbutanoïque | 2 | 0,4 |
| | 3 | 5,1 |
| | 4 | 9,5 |
| | 5 | 13,7 |
| 500 vpm d'acide benzoïque | 1 | 3,7 |
| | 2 | 0,3 |
| | 3 | 5,9 |
| | 4 | 12,0 |
| | 5 | 16,9 |
| | 6 | 15,5 |
| | 7 | 13,1 |

Tableau 6 : adsorption d'acide relevée après 44 heures de réaction

L'analyse de ces essais montre que la condition portant sur une surface spécifique élevée de l'aggloméré d'alumine est indispensable, puisque l'échantillon 2 n'offre que des résultats d'adsorption médiocres dans tous les cas, malgré un VPT et un V_{70Å} tous deux élevés.

Lorsque les alumines 4, 5 et 6 selon l'invention, épurées en Na₂O, sont comparées à l'alumine 1 de référence qui a conservé sa teneur normale en Na₂O mais présente un VPT et un V_{70Å} inférieurs, les alumines selon l'invention sont systématiquement plus avantageuses.

## Revendications

1. Procédé d'élimination des molécules oxygénées organiques, telles que les alcools et acides organiques, présentes dans un efiluent organique liquide ou gazeux, **caractérisé en ce qu'**on réalise cette élimination par adsorption desdites molécules oxygénées organiques sur des agglomérés d'alumine renfermant un ou des composés dopants sélectionnés parmi les composés de métaux alcalins, les composés de métaux alcalino-terreux et les composés de terres rares dont la teneur massique totale en ces éléments est inférieure à 5000 ppm, lesdits agglomérés présentant les
caractéristiques suivantes :
- une surface spécifique supérieure ou égale à 10 m²/g,
- un volume poreux total supérieur à ou égal à 45 ml/100 g, un V_{70Å} supérieur ou égal à 15 ml/100g.

2. Procédé selon la revendication 1 **caractérisé en ce que** lesdits composés dopants sont sélectionnés parmi les composés à base de sodium, de potassium, de calcium, de magnésium, de lanthane.

3. Procédé selon la revendication 2 **caractérisé en ce que** lesdits agglomérés d'alumine comportent comme unique composé dopant un composé de sodium.

4. Procédé selon l'une des revendications 1 à 3 **caractérisé en ce que** lesdits agglomérés d'alumine se présentent sous forme de billes.

5. Procédé selon la revendication 4 **caractérisé en ce que** lesdites billes ont un diamètre compris entre 0,5 et 10 mm.

6. Procédé selon l'une des revendications 1 à 3 **caractérisé en ce que** les agglomérés d'alumine se présentent sous la forme de matériaux extrudés.

7. Procédé selon la revendication 6 **caractérisé en ce que** lesdits matériaux extrudés ont une taille comprise entre 0,5 et 5 mm.

8. Procédé selon l'une des revendications 1 à 7 **caractérisé en ce que** ledit effluent organique est un hydrocarbure ou un mélange d'hydrocarbures.

9. Procédé selon l'une des revendications 1 à 8 **caractérisé en ce que** ladite élimination est réalisée à température ambiante.

10. Procédé selon l'une des revendications 1 à 9 **caractérisé en ce qu'**on procède périodiquement à une régénération des agglomérés d'alumine par traitement sous courant de gaz chaud.

11. Procédé selon la revendication 10 **caractérisé en ce que** ledit gaz chaud est un gaz inerte.

12. Procédé selon la revendication 11 **caractérisé en ce que** la température dudit gaz inerte est d'au moins 130 °C.

13. Procédé selon la revendication 10 **caractérisé en ce que** ledit gaz chaud est un gaz ou un mélange gazeux oxydant dont la température est d'au moins 150 °C.

14. Procédé selon la revendication 13 **caractérisé en ce que** ledit gaz ou mélange gazeux oxydant est sélectionné parmi l'air, un autre mélange oxygène/azote et un mélange contenant de la vapeur d'eau.

15. Procédé selon la revendication 10 **caractérisé en ce qu'**on utilise pour la régénération des agglomérés d'alumine plusieurs gaz chauds en succession, lesdits gaz chauds étant du type selon l'une au moins des revendications 11 à 14.

## Claims

1. A process for eliminating organic oxygen-containing molecules, such as alcohols and organic acids, present in an organic or gaseous effluent, the process being **characterized in that** said elimination is carried out by adsorbing said organic oxygen-containing molecules onto alumina agglomerates comprising one or more doping compounds selected from alkali metal compounds, alkaline-earth metal compounds and rare earth compounds with a total content by weight of said elements lower than 5000 ppm, said agglomerates having the following characteristics:
• a specific surface area of 10 m²/g or more;
• a total pore volume of 45 mL/100 g or more and a V_{70Å} of 15 mL/100 g or more.

2. A process according to claim 1, **characterized in that** said doping compounds are selected from compounds based on sodium, potassium, calcium, magnesium and lanthanum.

3. A process according to claim 2, **characterized in that** said alumina agglomerates comprise a sodium compound as the unique doping compound.

4. A process according to any one of claims 1 to 3, **characterized in that** said alumina agglomerates are in the form of beads.

5. A process according to claim 4, **characterized in that** the diameter of said beads is in the range 0.5 to 10 mm.

6. A process according to any one of claims 1 to 3, **characterized in that** the alumina agglomerates are in the form of extruded materials.

7. A process according to claim 6, **characterized in that** the size of said extruded materials is in the range 0.5 to 5 mm.

8. A process according to any one of claims 1 to 7, **characterized in that** said organic effluent is a hydrocarbon or a mixture of hydrocarbons.

9. A process according to any one of claims 1 to 8, **characterized in that** said elimination process is carried out at ambient temperature.

10. A process according to any one of claims 1 to 9, **characterized in that** the alumina agglomerates are periodically regenerated by treatment in a stream of hot gas.

11. A process according to claim 10, **characterized in that** said hot gas is an inert gas.

12. A process according to claim 11, **characterized in that** the temperature of said inert gas is at least 13°C.

13. A process according to claim 10, **characterized in that** said hot gas is an oxidizing gas or a mixture of oxidizing gas, the temperature of which is at least 150°C.

14. A process according to claim 13, **characterized in that** said oxidizing gas mixture or gas is selected from air, a further oxygen/nitrogen mixture and a mixture containing water steam.

15. A process according to claim 10, **characterized in that** a plurality of hot gases are used in succession to regenerate the alumina agglomerates, said hot gases being of the type defined in at least one of claims 11 to 14.

## Patentansprüche

1. Verfahren zur Entfernung organischer sauerstoffhaltiger Moleküle, wie etwa von Alkoholen und organischen Säuren, die in einem flüssigen oder gasförmigen Stoffstrom enthalten sind, **dadurch gekennzeichnet, dass** die Entfernung durch Adsorption der organischen sauerstoffhaltigen Moleküle an Aluminiumoxid-Agglomeraten erfolgt, die eine oder mehrerer Dotierverbindungen enthalten, welche aus den Alkalimetallverbindungen, den Erdalkalimetallverbindungen und den Seltenerdverbindungen ausgewählt sind, wobei deren Gesamtgehalt an diesen Elementen geringer als 5000 ppm nach Masse ist, wobei die Agglomerate die folgenden Eigenschaftmerkmale aufweisen:
- eine spezifische Oberfläche von mindestens 10 m²/g,
- ein Gesamtporerenvolumen von mindestens 45 ml/100 g, ein V_{70Å} von mindestens 15 ml/100 g.

2. Verfahren nach Anspruch 1, **dadurch gekennzeichnet, dass** die Dotierverbindungen aus den Verbindungen auf Basis von Natrium, von Kalium, von Calcium, von Magnesium, von Lanthan ausgewählt sind.

3. Verfahren nach Anspruch 2, **dadurch gekennzeichnet, dass** die Aluminiumoxid-Agglomerate als einzige Dotierverbindung eine Natriumverbindung aufweisen.

4. Verfahren nach einem der Ansprüche 1 bis 3, **dadurch gekennzeichnet, dass** die Aluminiumoxid-Agglomerate in Form von Kügelchen vorliegen.

5. Verfahren nach Anspruch 4, **dadurch gekennzeichnet, dass** die Kügelchen einen Durchmesser im Bereich von 0,5 bis 10 mm haben.

6. Verfahren nach einem der Ansprüche 1 bis 3, **dadurch gekennzeichnet, dass** die Aluminiumoxid-Agglomerate in Form von extrudierten Werkstoffen vorliegen.

7. Verfahren nach Anspruch 6, **dadurch gekennzeichnet, dass** die extrudierten Werkstoffe eine Größe im Bereich von 0,5 bis 5 mm haben.

8. Verfahren nach einem der Ansprüche 1 bis 7, **dadurch gekennzeichnet, dass** es sich bei dem organischen Stoffstrom um einen Kohlenwasserstoff oder ein Kohlenwasserstoffgemisch handelt.

9. Verfahren nach einem der Ansprüche 1 bis 8, **dadurch gekennzeichnet, dass** die Entfernung bei Raumtemperatur erfolgt.

10. Verfahren nach einem der Ansprüche 1 bis 9, **dadurch gekennzeichnet, dass** in regelmäßigen Abständen eine Regenerierung der Aluminiumoxid-Agglomerate durch Behandlung unter einem Strom von heißem Gas vorgenommen wird.

11. Verfahren nach Anspruch 10, **dadurch gekennzeichnet, dass** es sich bei dem heißen Gas um ein Inertgas handelt.

12. Verfahren nach Anspruch 11, **dadurch gekennzeichnet, dass** die Temperatur des Inertgases mindestens 130 °C beträgt.

13. Verfahren nach Anspruch 10, **dadurch gekennzeichnet, dass** es sich bei dem heißen Gas um ein oxidierendes Gas oder Gasgemisch handelt, dessen Temperatur mindestens 150 °C beträgt.

14. Verfahren nach Anspruch 13, **dadurch gekennzeichnet, dass** das oxidierende Gas oder Gasgemisch aus Luft, einem anderen Sauerstoff/Stickstoff-Gemisch und einem Gemisch, das Wasserdampf enthält, ausgewählt ist.

15. Verfahren nach Anspruch 10, **dadurch gekennzeichnet, dass** mehrere heiße Gase nacheinander verwendet werden, um die Aluminiumoxid-Agglomerate zu regenerieren, wobei die heißen Gase in ihrer Art mindestens einem der Ansprüche 11 bis 14 entsprechen.
